# EUROPEAN PATENT SPECIFICATION

(11) **EP 3 369 647 B1**
(45) Date of publication and mention of the grant of the patent: **24.02.2021**
(21) Application number: 18159007.6
(22) Date of filing: 27.02.2018
(51) Int. Cl.: B62H 5/18, B60R 25/09

(54) **AN ANTI-THEFT SYSTEM FOR A MOTOR VEHICLE**
DIEBSTRAHLSCHUTZSYSTEM FÜR EIN KRAFTFAHRZEUG
SYSTEME ANTIVOL POUR UN VEHICULE A MOTEUR

(30) Priority: 03.03.2017 IT 201700024140
(43) Date of publication of application: 05.09.2018
(73) Proprietor: CEV LAB S.r.l. con unico socio, 20020 Lainate (MI) (IT)
(72) Inventor: FRANCABANDIERA, Marino, 41012 Carpi (MODENA) (IT)
(74) Representative: Gagliardelli, Fabrizio

(56) References cited:
- EP-A1- 0 834 445
- EP-A1- 2 189 361
- DE-A1- 19 723 470
- DE-U1- 20 002 685
- DE-U1- 29 903 354
- FR-A1- 2 861 683
- US-B1- 6 178 787

## Description

The present invention relates to a motor vehicle comprising an anti-theft system.

Anti-theft devices called "disc locks" are known which can be removably locked to the brake disc of a wheel of a motor vehicle, so as to prevent them turning freely.

Disc locks are formed by a metal body substantially having a U-shape and a sliding pin, lockable and releasable by the action of a lock, which is adapted to be inserted into one of the holes of the disc; in this way, the shaped body acts as an obstacle against the rotation of the wheel, preventing unauthorised uses of the vehicle.

Disc locks are very common as they offer convenience and speed of application and removal, at a relatively contained cost, but are not however free from limits.

In fact, a disc lock can be tampered with, which allows the motor vehicle to be taken.

DE29903354U discloses a holder for storing a disc brake lock in motorized two-wheeled vehicles, having a housing 1 provided with a surface 2 having the conventional thickness of a brake disc, where the disc brake lock 7 can be placed when not in use, by mean of locking it with a bolt 8. Furthermore, a switch 11 is arranged such that it detects the presence or absence of the disc brake lock 7 in the holder by means of a feeler lever 5, thereby releasing or blocking the ignition of the vehicle.

DE19723470 describes a holder unit for a motorcycle without sharp corners or edges. The holder unit can be fixed directly on the frame by threaded bores. An electronic-mechanical security sensor system disconnects the ignition current to prevent starting when the brake disc is secured in the holder.

DE20002685 discloses a safety holder for brake disc locks, intended to be used with motorcycles or scooters, where a brake disc lock can be attached onto said holder.

The task of the present invention is that of proposing a motor vehicle comprising an anti-theft system that overcomes the drawbacks of the prior art.

This task is attained by the anti-theft system realised in accordance with claim 1.

Further characteristics and advantages of the present invention will become more apparent from the following indicative, and hence nonlimiting, description of a preferred, but not exclusive, embodiment of an anti-theft system according to the invention, as illustrated in the appended drawings, in which:
- figure 1 shows a lateral schematic view of a vehicle provided with the anti-theft system of the invention;

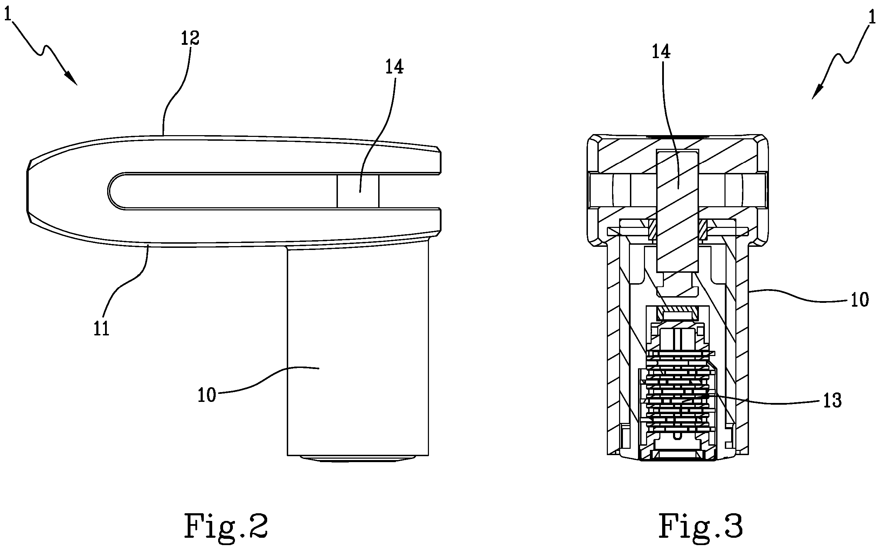

- figure 2 shows a lateral view of the disc lock of the invention;
- figure 3 shows a transverse sectional view of the disc lock;
- figure 4 is a view from above of the disc lock;
- figure 5 is a longitudinal sectional view of the disc lock;
- figure 6 is a transverse sectional lateral view of a seat for receiving the disc lock in which the disc lock itself is inserted; and
- figure 7 is a view from above of the seat of the previous figure.

With reference to the appended drawings, 1 indicates a disc lock provided in the anti-theft system of the invention.

The proposed system is intended to be implemented on a motor vehicle 2 equipped with disc brakes at the wheels, e.g. a motorcycle, a scooter, etc. The disc lock 1 is of the removably couplable type with the brake disc 20 of one of the wheels and may also be of the known type.

In detail, the disc lock 1 of the anti-theft system proposed may include a metal body 10, 11, 12 substantially having a U-shape and provided with a lock, the cylinder 13 of which acts on a sliding pin 14, lockable and releasable by the action of a key; in this case, the pin 14 is adapted to be inserted in one of the holes of the disc 20.

According to an important aspect of the invention, the system comprises a seat 3 for receiving the disc lock 1 and an electronic presence device 4 suitable for detecting whether the disc lock 1 is in said seat 3 and suitable for producing a presence signal that is a function of the performed measurements.

In other words, if the disc lock 1 is situated in the seat 3 provided, the presence device 4 produces a signal identifying the presence condition of the disc lock 1 in the seat 3.

The presence device 4 may comprise one or more switches, or ultrasound or infra-red devices, RFID technology transponders and so on.

The seat 3 for the disc lock 1 is situated at a distance from the brake discs 20 and, therefore, the presence of the disc lock 1 is representative of the fact that the discs 20 are unlocked, i.e. free, and the vehicle 2 can be started up and used freely; more detail will be provided on this below.

The invention further provides a processing unit, e.g. comprising the engine control unit (or "ECU") of the motor vehicle 2, which is adapted to allow or inhibit the startup of the engine of the motor vehicle 2.

In particular, the processing unit is connected to the presence device 4, directly or through an additional control unit, and is configured for inhibiting or permitting the startup of the motor vehicle 2, in function of the presence signal.

In other words, once the disc lock 1 has been separated from the disc 20 and placed back in the seat 3, the presence device 4 will provide the processing unit with a signal that permits the startup of the engine. Conversely, until the unit receives the presence signal associated with the fact that the disc lock 1 is placed back in the seat 3, the startup of the engine is inhibited.

Before illustrating further preferential aspects of the invention, it is to be noted that already from this first description of its general characteristics, it can be understood how it completely overcomes the limits of the prior art.

In fact, for a potential thief intending to take the motor vehicle 2 equipped with the proposed system, it will no longer be sufficient to unscrew the disc 20 to which the disc lock 1 is coupled or to use other similar expedients, since if the disc lock 1 is not detected in its resting seat 3, the control unit will not permit the startup of the vehicle.

Particular embodiments of the invention are described below, with the aid of the appended figures.

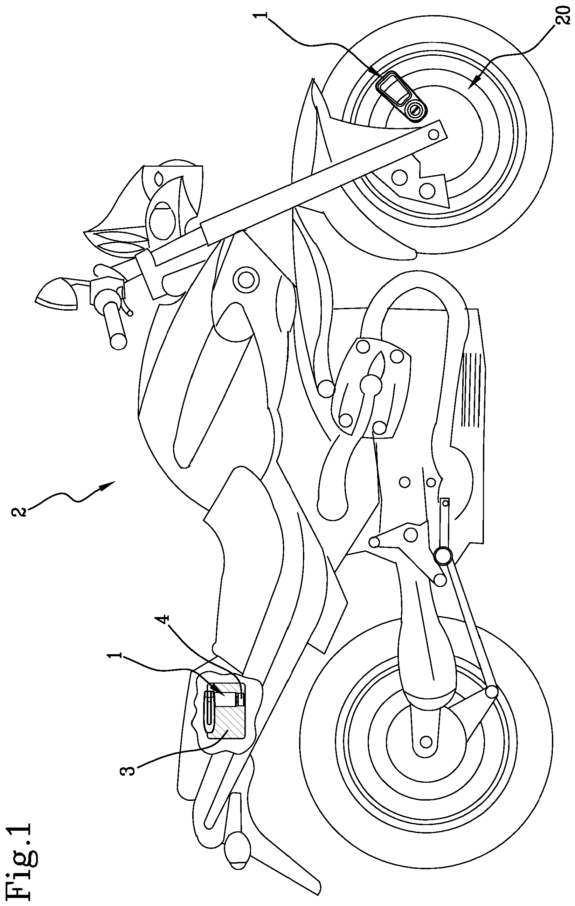

First of all, preferably, the seat 3 for the disc lock 1 is on-board the motor vehicle 2, e.g. in the so-called "under-saddle" space (see the representation provided in figure 1).

In practice, motor vehicles 2 are often equipped with a movable saddle, which closes a cavity afforded in the chassis, where, for example, the helmet can be placed.

In the preferential embodiment of the invention, at this internal volume, the seat 3 may be afforded for receiving the disc lock 1, once it has been separated from the disc 20.

To be precise, the seat 3 can comprise a cavity being counter-shaped to the disc lock 1 itself, so as to make it more difficult for a potential thief to be able to "trick" the presence device 4 by inserting foreign objects into the seat 3 in the place of the disc lock 1.

In detail, the metal block of the disc lock 1 can be comprised of a main element 10, e.g. cylindrical, which houses the cylinder 13 of the lock and is provided with the pin 14 and with a U-shaped, curved element 11, 12, which originates from the main element and proceeds to fold back onto itself, forming two portions 11, 12 facing each other.

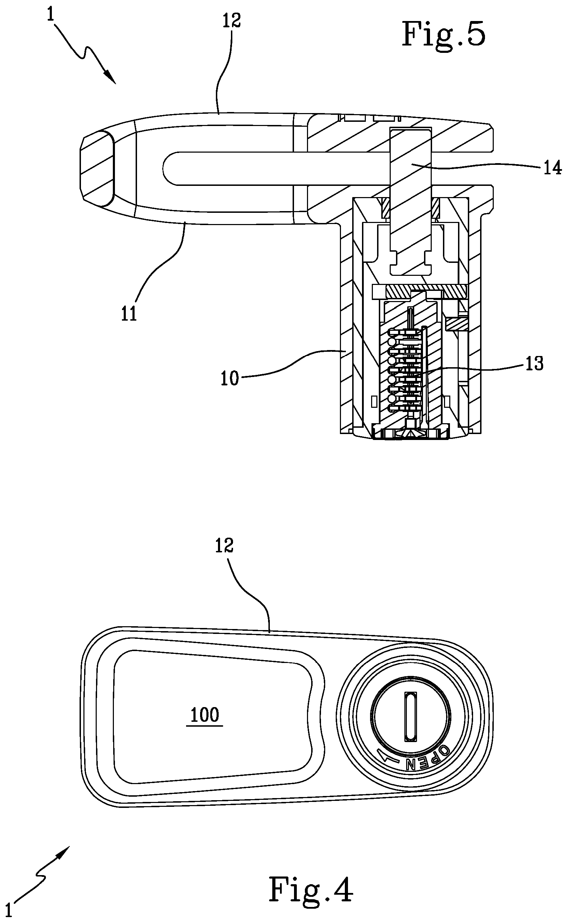

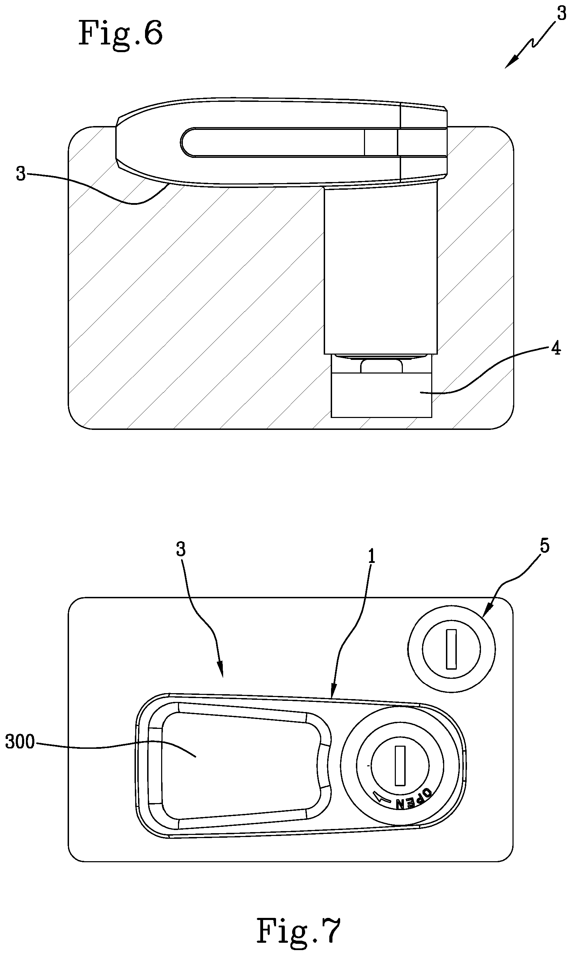

In this case, the two portions 11, 12 may be equipped with a related passage 100 (shown in figure 4), facing that of the other portion, to permit the insertion of a projecting body 300 (visible in figure 7) with which the seat 3 is provided, defining the mutual shape coupling between the seat 3 and the disc lock 1.

As can be seen in the schematic figure 6, the cavity of the seat 3 comprises a bottom at which the aforementioned presence device 4 is preferably located, e.g. a switch as shown in the example.

According to an optional aspect of the invention, a bypass device is provided, preferably located next to the seat 3 for the disc lock 1 and connected to the processing unit.

The bypass device is suitable for producing a bypass signal upon activation of a user, sent to the processing unit, which is configured to enable the motor vehicle 2 to be started up following receipt of such bypass signal, also in the absence of said presence signal.

In other words, if the user loses the disc lock 1 or for whatever reason needs to use the vehicle 2 without it, the engine startup consent mechanism defined by the presence of the disc lock 1 in the seat 3 needs to be bypassed.

For this reason, the invention can advantageously provide for the startup of the vehicle to be permitted subject to the activation of the bypass device.

In particular, preferably, as shown in figure 7, the bypass device includes the cylinder of a lock 5 and can therefore be driven by a key that, preferably, is the same key that enables the opening / closing of the disc lock 1.

Furthermore, the key used to open and close the disc lock 1 is the same one used to drive the motor vehicle 2 ignition switch.

In practice, with a single key, the user can open and close the disc lock 1, start the motor vehicle 2 and activate or deactivate the bypass device.

In this way, the number of keys needed to safely use the vehicle 2 can be reduced, all to the advantage of the user's convenience.

## Claims

1. A motor vehicle (2) provided with a disc brake and comprising an anti-theft system, in turn comprising a disc lock (1) that is removably couplable with a disc (20) of said disc brake of said motor vehicle (2), including:
a seat (3) for receiving said disc lock (1);
a presence device (4) suitable for detecting whether the disc lock (1) is in said seat (3) and suitable for producing a presence signal that is a function of the performed measurements; and
a processing unit, connected to said presence device (4) and configured for inhibiting or permitting the startup of the motor vehicle (2), in function of said presence signal;
**characterized in that** said disc lock (1) comprises an opening / closing lock that is drivable by a starter key of the motor vehicle (2) itself.

2. The motor vehicle (2) according to the preceding claim, wherein said processing unit is configured for inhibiting the startup of the motor vehicle (2) until it receives a presence signal corresponding to the fact that the disc lock (1) is in said seat (3).

3. The motor vehicle (2) according to at least one preceding claim, wherein said presence device (4) comprises a switch that is suitable for being pressed by said disc lock (1) placed in said seat (3).

4. The motor vehicle (2) according to at least one preceding claim, wherein said seat (3) comprises a cavity for receiving the disc lock (1), said cavity having a shape that is the reverse of that of the disc lock (1) itself.

5. The motor vehicle (2) according to the preceding claim, wherein the cavity (3) comprises a bottom at which said presence device (4) is located.

6. The motor vehicle (2) according to claim 1, wherein said processing unit is a motor control unit of the motor vehicle (2) itself.

7. The motor vehicle (2) according to claim 1, wherein said seat (3) is located on the edge of the motor vehicle (2) itself.

8. The motor vehicle (2) according to the preceding claim, wherein said seat (3) is obtained in a space under the saddle.

9. The motor vehicle (2) according to at least one of the preceding claims , comprising a bypass device connected to the processing unit and suitable for producing a bypass signal upon activation of a user, the processing unit being configured to enable the motor vehicle (2) to be started up following receipt of said bypass signal, also in the absence of said presence signal.

10. The motor vehicle (2) according to the preceding claim, wherein said bypass device comprises a locking cylinder (5), which is drivable by a key that is also suitable for driving a lock of the disc lock (1), driving said cylinder causing the bypass signal.

## Patentansprüche

1. Kraftfahrzeug (2), versehen mit einer Scheibenbremse und umfassend ein Diebstahlschutzsystem, wiederum umfassend eine Scheibenschloss (1), das entfernbar mit einer Scheibe (20) der Scheibenbremse des Kraftfahrzeugs (2) kuppelbar ist, einschließend:
einen Sitz (3) zur Aufnahme des Scheibenschlosses (1);
eine Anwesenheitserfassungsvorrichtung (4), die geeignet ist, um zu erfassen, ob sich das Scheibenschloss (1) im Sitz (3) befindet und die geeignet ist, um ein Anwesenheitssignal zu erzeugen, das eine Funktion der durchgeführten Messungen ist, und
eine Verarbeitungseinheit, die mit der Anwesenheitserfassungsvorrichtung (4) verbunden und konfiguriert ist, um das Starten des Kraftfahrzeugs (2) in Funktion des Anwesenheitssignals zu hemmen oder zu erlauben,
**dadurch gekennzeichnet, dass** das Scheibenschloss (1) ein Öffnungs- /Schließschloss umfasst, das mittels eines Startschlüssels des Kraftfahrzeugs (2) betätigt werden kann.

2. Kraftfahrzeug (2) nach dem vorhergehenden Anspruch, wobei die Verarbeitungseinheit konfiguriert ist, um das Starten des Kraftfahrzeugs (2) zu hemmen, bis sie ein Anwesenheitssignal empfängt, das der Tatsache entspricht, dass sich das Scheibenschloss (1) in seinem Sitz (3) befindet.

3. Kraftfahrzeug (2) nach mindestens einem vorhergehenden Anspruch, wobei die Anwesenheitserfassungsvorrichtung (4) einen Schalter umfasst, der geeignet ist, um vom im Sitz (3) platzierten Scheibenschloss (1) gedrückt zu werden.

4. Kraftfahrzeug (2) nach mindestens einem vorhergehenden Anspruch, wobei der Sitz (3) einen Hohlraum umfasst, um das Scheibenschloss (1) aufzunehmen, wobei der Hohlraum eine Form aufweist, die gegenständig zum Scheibenschloss (1) ausgebildet ist.

5. Kraftfahrzeug (2) nach dem vorhergehenden Anspruch, wobei der Hohlraum (3) eine Unterseite umfasst, an der die Anwesenheitserfassungsvorrichtung (4) angeordnet ist.

6. Kraftfahrzeug (2) nach Anspruch 1, wobei die Verarbeitungseinheit eine Motorsteuerungseinheit des Kraftfahrzeugs (2) ist.

7. Kraftfahrzeug (2) nach Anspruch 1, wobei der Sitz (3) an der Kante des Kraftfahrzeugs (2) angeordnet ist.

8. Kraftfahrzeug (2) nach dem vorhergehenden Anspruch, wobei der Sitz (3) in einem Raum unter dem Sattel ausgebildet ist.

9. Kraftfahrzeug (2) nach mindestens einem der vorhergehenden Ansprüche, umfassend eine Umgehungsvorrichtung, die mit der Verarbeitungseinheit verbunden und geeignet ist, um bei Aktivierung eines Nutzers ein Umgehungssignal zu erzeugen, wobei die Verarbeitungseinheit konfiguriert ist, um dem Kraftfahrzeug (2) zu ermöglichen, nach dem Empfang des Umgehungssignals auch ohne Anwesenheitssignal gestartet zu werden.

10. Kraftfahrzeug (2) nach dem vorhergehenden Anspruch, wobei die Umgehungsvorrichtung einen Schließzylinder (5) umfasst, der mittels eines Schlüssels betätigt werden kann, der auch geeignet ist, um ein Schloss des Scheibenschlosses (1) zu betätigen, wobei das Betätigen des Zylinders das Umgehungssignal hervorruft.

## Revendications

1. Véhicule à moteur (2) muni d'un frein à disque et comprenant un système antivol, comprenant à son tour un verrou à disque (1) qui peut être couplé de manière amovible avec un disque (20) dudit frein à disque dudit véhicule à moteur (2), comprenant :
un siège (3) pour recevoir ledit verrou à disque (1) ;
un dispositif de présence (4) adapté pour détecter si le verrou à disque (1) est dans ledit siège (3) et adapté pour produire un signal de présence qui est une fonction des mesures effectuées ; et
une unité de traitement, connectée audit dispositif de présence (4) et configurée pour inhiber ou permettre le démarrage du véhicule à moteur (2), en fonction dudit signal de présence ;
**caractérisé en ce que** ledit verrou à disque (1) comprend une serrure de fermeture / ouverture qui peut être actionnée par une clé de démarrage du véhicule à moteur (2) lui-même.

2. Véhicule à moteur (2) selon la revendication précédente, dans lequel ladite unité de traitement est configurée pour inhiber le démarrage du véhicule à moteur (2) jusqu'à ce qu'elle reçoive un signal de présence correspondant au fait que le verrou à disque (1) se trouve dans ledit siège (3).

3. Véhicule à moteur (2) selon au moins une revendication précédente, dans lequel ledit dispositif de présence (4) comprend un interrupteur qui est adapté pour être pressé par ledit verrou à disque (1) placé dans ledit siège (3).

4. Véhicule à moteur (2) selon au moins une revendication précédente, dans lequel ledit siège (3) comprend une cavité pour recevoir le verrou à disque (1), ladite cavité ayant une forme qui est l'inverse de celle du verrou à disque (1) lui-même.

5. Véhicule à moteur (2) selon la revendication précédente, dans lequel la cavité (3) comprend un fond au niveau duquel est situé ledit dispositif de présence (4).

6. Véhicule à moteur (2) selon la revendication 1, dans lequel ladite unité de traitement est une unité de commande du moteur du véhicule à moteur (2) lui-même.

7. Véhicule à moteur (2) selon la revendication 1, dans lequel ledit siège (3) est situé sur le bord du véhicule à moteur (2) lui-même.

8. Véhicule à moteur (2) selon la revendication précédente, dans lequel ledit siège (3) est obtenu dans un espace sous la selle.

9. Véhicule à moteur (2) selon au moins une des revendications précédentes, comprenant un dispositif de dérivation connecté à l'unité de traitement et adapté pour produire un signal de dérivation lors de l'activation d'un utilisateur, l'unité de traitement étant configurée pour permettre le démarrage du véhicule à moteur (2) après réception dudit signal de dérivation, également en l'absence dudit signal de présence.

10. Véhicule à moteur (2) selon la revendication précédente, dans lequel ledit dispositif de dérivation comprend un cylindre de verrouillage (5), qui peut être entraîné par une clé qui est également adaptée pour entraîner une serrure du verrou à disque (1), l'entraînement dudit cylindre provoquant le signal de dérivation.
